Europäisches Patentamt

European Patent Office

Office européen des brevets

(11) Veröffentlichungsnummer: **0 182 290**
A2

(12) **EUROPÄISCHE PATENTANMELDUNG**

(21) Anmeldenummer: 85114479.0

(22) Anmeldetag: 14.11.85

(51) Int. Cl.⁴: **B 23 C 5/24**

(30) Priorität: 15.11.84 DE 3441821

(43) Veröffentlichungstag der Anmeldung: 28.05.86
Patentblatt 86/22

(84) Benannte Vertragsstaaten: AT BE CH DE FR GB LI LU
NL SE

(71) Anmelder: **Walter Kieninger GmbH Hartmetall- und
Diamantwerkzeugfabrik, An den Stegmatten 7,
D-7630 Lahr-Mietersheim (DE)**

(72) Erfinder: **Kieninger, Walter, Am Schulacker 18,
D-7630 Lahr (DE)**

(74) Vertreter: **Patentanwälte Grünecker, Kinkeldey,
Stockmair & Partner, Maximilianstrasse 58,
D-8000 München 22 (DE)**

(54) **Messerkopf.**

(57) Die Erfindung bezieht sich auf einen Messerkopf mit
einem im wesentlichen zylindrischen Grundkörper und mehreren an dessen Umfangsbereich angeordneten, auswechselbaren, in axialer und radialer Richtung des Grundkörpers mindestens eine Schneide aufweisenden Schneidkörpern. Zur Erreichung einer betriebssicheren, kleinste Toleranzen ermöglichenden dreidimensionalen Einstellung des Schneidkörpers
ist jeder der Schneidkörper an einem am Grundkörper gehalterten Trägerteil gelagert, welches mittels separater, zwischen
Grundkörper und Trägerteil angeordneter Verstelleinrichtungen radial und axial zum Grundkörper verstellbar und mittels
einer Spanneinrichtung an diesen fixierbar ist.

Beschreibung

Die Erfindung betrifft einen Messerkopf mit einem im wesentlichen zylindrischen Grundkörper und mehreren, an dessen Umfangsbereich angeordneten, auswechselbaren, in axialer und oder radialer Richtung des Grundkörpers mindestens eine Schneide aufweisenden Schneidkörpern.

Bei derartigen Messerköpfen, welche vornehmlich als Fräswerkzeuge in der Metallverarbeitung zur Anwendung gelangen, ist es unabdingbar, daß die Schneidkörper bzw. deren Schneiden relativ zum Grundkörper des Messerkopfes einstellbar sind. Dieser Einstellvorgang muß mit höchster Präzision erfolgen und zugleich sicherstellen, daß sich die Lage der Schneidkörper relativ zu dem Grundkörper während des Einsatzes des Messerkopfes nicht verändert.

Der Erfindung liegt die Aufgabe zugrunde, einen Messerkopf der eingangs erläuterten Art zu schaffen, welcher bei hoher Betriebssicherheit und einfacher Bedienbarkeit eine exakte dreidimensionale Einstellung der Schneidkörper relativ zum Grundkörper ermöglicht.

Die Aufgabe wird erfindungsgemäß dadurch gelöst, daß jeder der Schneidkörper an einem am Grundkörper gelagerten Trägerteil gelagert ist, welches mittels separater, zwischen Grundkörper und Trägerteil angeordneter Verstelleinrichtungen radial und axial zum Grundkörper verstellbar und mittels einer Spanneinrichtung an diesem fixierbar ist.

Der erfindungsgemäße Messerkopf zeichnet sich durch eine Reihe erheblicher Vorteile aus. Durch die Lagerung des Schneidkörpers an einem Trägerteil, welches wiederum am Grundkörper des Messerkopfes gelagert ist, ist es möglich, einen sehr kleinen Schneidkörper zu verwenden, da die zur Verstellung notwendigen Funktionsteile nicht an dem Schneidkörper, sondern an dem Trägerteil ausgebildet sind. Insbesondere bei Verwendung hochbelastbarer und hochverschleißfester Schneidkörper spielt die Größe und das Volumen der
Schneidkörper eine entscheidende Rolle im Hinblick auf die
Fertigungs- und Bearbeitungskosten. Mit dem erfindungsgemäßen Messerkopf ist es deshalb möglich, Schneidkörper geringster Abmessungen zu verwenden. Das Trägerteil ist mittels separater Verstelleinrichtungen radial und axial zum
Grundkörper verstellbar, so daß die Lage der Schneiden
dreidimensional relativ zum Grundkörper veränderbar ist.
Durch die Schaffung separater Verstelleinrichtungen ist gewährleistet, daß der Verstellvorgang in sicherer Weise auch
von ungeübtem Bedienungspersonal durchgeführt werden kann.
Nach erfolgter Einstellung der Lage des Schneidkörpers ist
dieser mittels einer separaten Spanneinrichtung an dem
Grundkörper fixierbar, um zu gewährleisten, daß während des
Einsatzes des Messerkopfes eine Verstellung der Lage des
Schneidkörpers in sicherer Weise verhindert wird. Die Fixierung des Schneidkörpers durch die separate Spanneinrichtung
erfolgt unabhängig von den Verstelleinrichtungen, so daß
diese durch die Spanneinrichtung nicht beeinflußt werden.

Mit Vorteil ist der erfindungsgemäße Messerkopf so ausgebildet, daß das Trägerteil in einer im wesentlichen radial
zur Drehachse des Grundkörpers angeordneten, in radialer
Richtung im wesentlichen parallele Flächen aufweisenden Nut
gehalten ist. Auf diese Weise wird einerseits sichergestellt,
daß das Trägerteil sowohl axial als auch radial verstellbar
ist, während andererseits die während des Schneidvorganges
auf den Schneidkörper und damit auf das Trägerteil übertragenen Kräfte in betriebssicherer Weise auf den Grundkörper übergeleitet werden können. Bedingt durch diese Art
der Kraftüberleitung von der in Eingriff befindlichen
Schneide auf den Grundkörper ist es bei dem erfindungsgemäßen Messerkopf möglich, die Ausgestaltung der Schneidkörper in einem weiten Bereich zu variieren, insbesondere
verschiedene Schneid- bzw. Spanwinkel vorzusehen und den Schneiden eine dem jeweiligen Bearbeitungsfall angepaßte Geometrie zu verleihen, ohne daß deswegen ein anders ausgestalteter Grundkörper des Messerkopfes zur Anwendung kommen müßte. Ein weiterer entscheidender Vorteil ergibt sich auch daraus, daß bei einem derartigen Messerkopf der Schneidkörper aus den verschiedensten Schneidstoffen bestehen kann, so daß ein derartiger Messerkopf auch im Hinblick auf zukünftige Werkstoffentwicklungen universell einsetzbar ist.

Eine besonders günstige Ausgestaltung des erfindungsgemäßen Messerkopfes ist auch dadurch gegeben, daß jede der Verstelleinrichtungen im wesentlichen in Form eines Keils ausgebildet ist, der im Bereich der Nut mit dem Trägerteil in Zusammenwirkung bringbar ist. Derartige keilförmige Verstelleinrichtungen sind einerseits ausgesprochen kostengünstig herzustellen, andererseits zeichnen sie sich durch eine einfache und betriebssichere Wirkungsweise aus, da durch den Winkel des Keils die Feinheit der Einstellbarkeit praktisch beliebig veränderbar ist. Die Anordnung der Verstelleinrichtungen im Bereich der Nut des Trägerteils gewährleistet eine besonders platzsparende Bauweise des Messerkopfes, so daß eine größtmögliche Anzahl an Schneidkörpern an dem Grundkörper angeordnet werden können. Ein weiterer entscheidender Vorteil, der sich durch Anordnung der keilförmigen Verstelleinrichtungen im Bereich der Nut des Grundkörpers ergibt, besteht darin, daß bei der Fertigung des Grundkörpers und bei der Bearbeitung der Nuten, die für den Eingriff der Keile notwendigen Flächen bereits mitbearbeitet werden können, so daß kein zusätzlicher Bearbeitungsvorgang mehr nötig ist.

Eine vorteilhafte Ausgestaltung des erfindungsgemäßen Messerkopfes ist weiterhin dadurch gegeben, daß zur Axialverstellung des Trägerteils der Axialverstellkeil auf der der Axialvorschubrichtung des Grundkörpers gegenüberliegenden Seite des Trägerteils angeordnet ist und eine im wesentlichen radial verlaufende Gewindebohrung aufweist, die mit einer Gewindebohrung im Grundkörper fluchtet und daß mit den beiden Gewindebohrungen eine Differentialschraube zur Bewegung des Axialverstellkeils in Eingriff bringbar ist.

Eine derartige Ausbildung der Axialverstelleinrichtung zeichnet sich durch ein hohes Maß an Betriebssicherheit und Einfachheit aus, da die durch den Axialverstellkeil auf den Trägerteil aufgebrachten Kräfte direkt auf den Grundkörper übergeleitet werden. Durch die Anordnung einer Differentialschraube ist es möglich, den Trägerteil in geringsten Toleranzen, welche sich im Bereich von 1/1000 mm bewegen, einzustellen. Durch den Einsatz einer Differentialschraube mit differenziert laufendem Gewinde ergibt sich der Vorteil, daß die Bewegbarkeit des Keils relativ zu dem Grundkörper durch Änderung der Gewindeausbildung dem jeweiligen Einsatzbereich des Messerkopfes anpassbar ist. Weiterhin zeichnen sich die fluchtenden Gewindebohrungen zur Aufnahme der Differentialschraube durch, im Vergleich zu bekannten Verstellsystemen, extrem niedrige Herstellungskosten sowie durch eine überraschend hohe Wirksamkeit aus.

In besonders vorteilhafter Weise ist der erfindungsgemäße Messerkopf auch dadurch ausgezeichnet, daß zur Radialverstellung des Trägerteils der Radialverstellkeil auf der der Drehrichtung des Grundkörpers abgewandten Seite des Trägerteils angeordnet ist und mit einer im wesentlichen in radialer Richtung weisenden Anlagefläche des Trägerteils in Eingriff bringbar ist und daß im Bereich des Radialverstellkeils der Grundkörper eine im wesentlichen axial verlaufende Gewindebohrung aufweist, mit welcher eine Bundschraube in Eingriff bringbar ist, deren Schraubenkopfunterseite in Anlage an den Radialverstellkeil bringbar ist. Durch eine derartige Anordnung des Radialverstellkeils wird gewährleistet, daß die auf den Trägerteil bzw. den Schneidkörper einwirkenden Schnittkräfte eine Belastung des Trägerteils in Richtung auf den Radialverstellkeil hervorrufen, wodurch unter allen Betriebsbedingungen eine sichere Zusammenwirkung zwischen dem Trägerteil, dem Radialverstellkeil und dem Grundkörper gewährleistet ist. Ebenso wie bei dem Axialverstellkeil ist es auch bei dem Radialverstellkeil möglich, durch Änderung des Keilwinkels die Feinheit der Einstellbarkeit zu variieren und den jeweiligen Einsatzbedingungen des Messerkopfes anzupassen. Der Verstellvorgang erfolgt mittels einer Bundschraube, welche in einem im Grundkörper vorgesehenen Gewinde aufgenommen ist. Diese Art der Verstellbarkeit des Radialverstellkeils ist mit sehr niedrigen Produktionskosten zu verwirklichen und gewährleistet ein Höchstmaß an Betriebssicherheit. Die Schneidkräfte werden von dem Schneidkörper über das Trägerteil und den Radialverstellkeil direkt auf den Grundkörper übertragen, die Höhe der von der Bundschraube aufzunehmenden Kraft ist bei einer derartigen Ausbildung äußerst gering.

In besonders vorteilhafter Weise ist der erfindungsgemäße Messerkopf fernerhin so ausgestaltet, daß auf der dem Axialverstellkeil gegenüberliegenden Seite des Trägerteils ein Spannkeil angeordnet ist, der von einer Gewindebohrung durchsetzt ist, die mit einer Gewindebohrung des Grundkörpers fluchtet, wobei in den Gewindebohrungen eine Differentialschraube zur Bewegung des Spannkeils angeordnet ist und daß weiterhin das Trägerteil mit einer mit einem Gewinde versehen, im wesentlichen in einer zum Grundkörper radialen Ebene verlaufenden Ausnehmung versehen ist, in welcher eine Nachführschraube zur radialen Bewegung des Trägerteils führbar und in Anlage an dem Grundkörper bringbar ist. Durch die Anordnung eines zusätzlichen Spannkeils ergibt sich der Vorteil, daß die mittels des Axialverstellkeils und des Radialverstellkeils vorgesehene Lage des Trägerteils relativ zum Grundkörper fixierbar ist, ohne daß dazu die Radial- oder Axialverstelleinrichtungen betätigt werden müßten. Auf diese Weise ist es ohne weiteres möglich, den Schneidkörper mit Genauigkeiten im Bereich von 1/1000 mm einzustellen. Da der Spannkeil auf der dem Radialverstellkeil gegenüberliegenden Seite des Trägerteils angeordnet ist und die durch ihn aufgebrachten Kräfte im wesentlichen in derselben Richtung wie die durch den Schneidvorgang hervorgerufenen Umfangskräfte wirken, ergibt sich eine Addition dieser Kräfte zu einer Gesamtkraft, welche der durch den Radialkeil hervorgerufenen Kraft entgegenwirkt. Auf diese Weise ist es möglich, durch das Zusammenwirken von Radialverstellkeil und Spannkeil einen Großteil der in Umfangsrichtung wirkenden Schnittkräfte auf besonders einfache Weise zu kompensieren. Das führt dazu, daß das Trägerteil und der Schneidkörper wesentlich kleiner dimensioniert werden können, wodurch sich einerseits die Herstellungskosten, insbesondere für den Schneidkörper erniedrigen und andererseits eine größere Anzahl an Schneidkörpern am Umfang des Grundkörpers angeordnet werden können. Durch die Verwendung der Nachführschraube wird sichergestellt, daß zwischen dem Trägerteil und den Verstellkeilen bzw. dem Spannkeil stets eine Mindestkraftbeaufschlagung vorliegt, so daß das Trägerteil auch bei nicht im Einsatz befindlichem Messerkopf gegenüber dem Grundkörper in sicherer Weise fixiert ist.

In besonders vorteilhafter Weise ist der erfindungsgemäße Messerkopf so ausgebildet, daß der Schneidkörper an dem Trägerteil mittels einer Befestigungsschraube befestigbar ist und um die Achse der Befestigungsschraube zumindest in einen bestimmten Bereich verschwenkbar ist und daß die Schwenkbewegung mittels zweier im Trägerteil gelagerter Einstellschrauben begrenzbar ist. Durch eine derartige Schwenkbarkeit des Schneidkörpers wird erreicht, daß dieser zusätzlich zur axialen und radialen Verstellbarkeit um eine im wesentlichen tangential zum Umfang des Grundkörpers gelegene Achse verschwenkt werden kann. Eine derartige Schwenkbewegung erweist sich insbesondere dann als besonders vorteilhaft, wenn genormte Schneidkörper zur Anwendung kommen, welche in ihrer Lage speziellen geometrischen Verhältnissen angepaßt werden sollen.

Eine besonders günstige Ausbildung des erfindungsgemäßen Messerkopfes ist weiterhin dadurch gegeben, daß der Schneidkörper in Form eines eine Schneidplatte tragenden Schneidplattenträgers ausgebildet ist. Auf diese Weise ist es möglich, an dem Messerkopf die verschiedensten genormten Schneidplatten zu befestigen. Derartige Normschneidplatten können aus den verschiedensten Schneidstoffen mit oder ohne Sonderbestückung hergestellt sein, wie etwa aus polykristallinem Diamant oder polykristallinem Bornitrid, sie können außerdem die verschiedensten Schneidengeometrien oder -formen aufweisen. Zur Anpassung des Messerkopfes an die entsprechende Normschneidplatte ist es lediglich nötig, einen entsprechenden Schneidplattenträger einzusetzen. Daraus ergibt sich der weitere Vorteil, daß es möglich ist, mit dem erfindungsgemäßen Messerkopf auch Formfräsarbeiten mit kompliziertester Geometrie durchzuführen.

Eine besonders günstige Ausgestaltung des erfindungsgemäßen Messerkopfes ist auch dadurch gegeben, daß der Schneidkörper eine mit einer radial nach außen weisenden Anlagefläche versehene Wulst aufweist, die mit einer eine radial nach innen weisende Anlagefläche aufweisenden Nut des Trägerteils in Eingriff bringbar ist. Durch eine derartige Ausgestaltung ist es auf besonders einfache Weise möglich, den erfindungsgemäßen Messerkopf auch für Hochgeschwindigkeitsfräsarbeiten zu verwenden, da durch den formschlüssigen Eingriff der Wulst in die Nut die auftretenden Zentrifugalkräfte in sicherer Weise aufgenommen werden können, ohne daß die erfolgte Einstellung der Lage des Schneidkörpers verändert wird.

Eine günstige Ausgestaltung des erfindungsgemäßen Messerkopfes ist weiterhin dadurch erreicht, daß der Grundkörper in seinem Umfangsbereich eine Ringnut aufweist, in welcher mindestens ein Auswuchtkörper befestigbar ist. Damit kann auf besonders einfache Weise die zum Durchführung von Hochgeschwindigkeitsfräsarbeiten benötigte Auswuchtung des Messerkopfes durch einfache Verschiebung des Auswuchtkörpers erfolgen, ohne daß dazu zusätzliche, den Fräsvorgang beeinflussende, Teile notwendig wären.

Mit Vorteil ist der Messerkopf so ausgebildet, daß der Grundkörper in Form eines die Schneidkörper tragenden Trägers und eines ringförmigen, an dem Träger befestigten, die Ringnut sowie Kontrollflächen aufweisenden Rings ausgebildet ist. Durch eine derartige Ausgestaltung läßt sich der Träger selbst besonders einfach und mit geringen Kosten herstellen, wobei insbesondere die Fertigung der Nuten zur Aufnahme der Trägerteile und der Verstellkeile besonders einfach erfolgen kann.        Die Verbindung des Trägers mit dem Ring kann entweder durch einen Preßsitz oder durch zusätzliche Schrauben erfolgen. Die an dem Ring ausgebildeten Kontrollflächen ermöglichen auf besonders einfache Weise die Prüfung auf Rundlauf bei einem in einer Werkzeugmaschine eingesetzten Messerkopf.

Im folgenden wird der erfindungsgemäße Messerkopf anhand von Ausführungsbeispielen in Verbindung mit der Zeichnung beschrieben. Dabei zeigt:

Figur 1   eine Draufsicht, teils schematisch, auf ein erstes Ausführungsbeispiel des Messerkopfes,

Figur 2   eine Seitenansicht des Messerkopfes von Fig. 1,

Figur 3   einen Schnitt entlang der Linie III-III von Fig. 2,

Figur 4   einen Schnitt entlang der Linie IV-IV von Fig. 3, durch den Spannkeil und den Radialverstellkeil,

Figur 5   einen Schnitt entlang der Linie V-V von Fig. 2 durch den Axialverstellkeil,

Figur 6   einen Schnitt entlang der Linie VI-VI von Fig. 1,

0182290

Figur 7   einen Schnitt gemäß der Linie VII-VII von Fig. 6,

Figur 8   einen Schnitt entlang der Linie VIII-VIII von

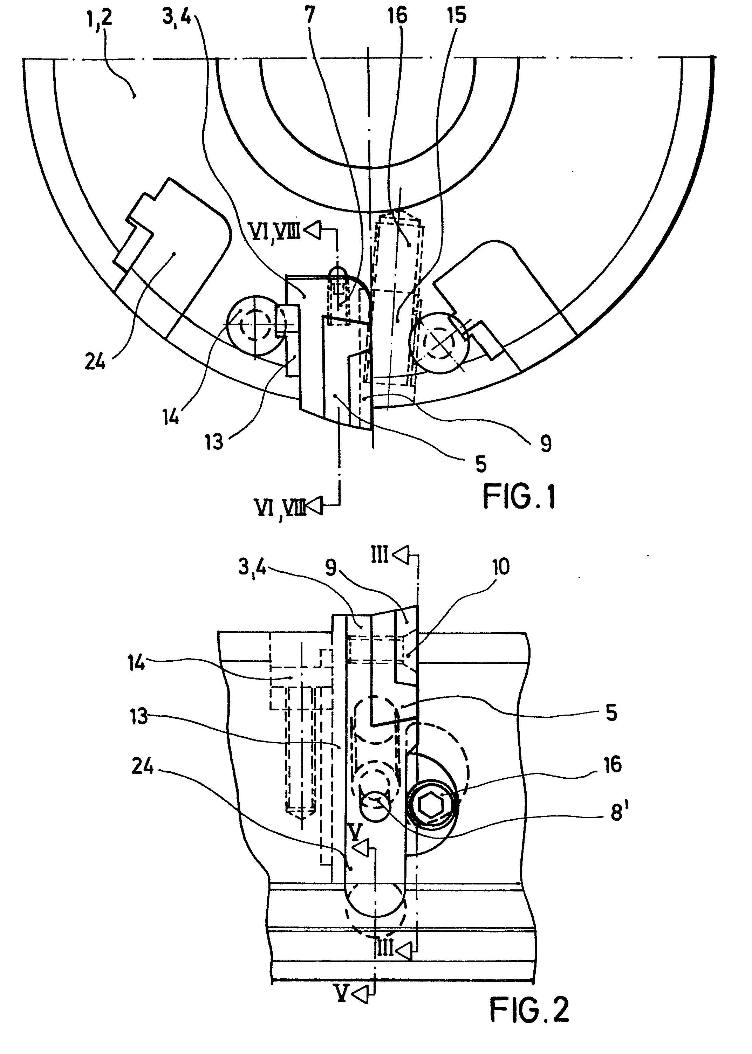

          Fig. 1, ein zweites Ausführungsbeispiel darstellend,

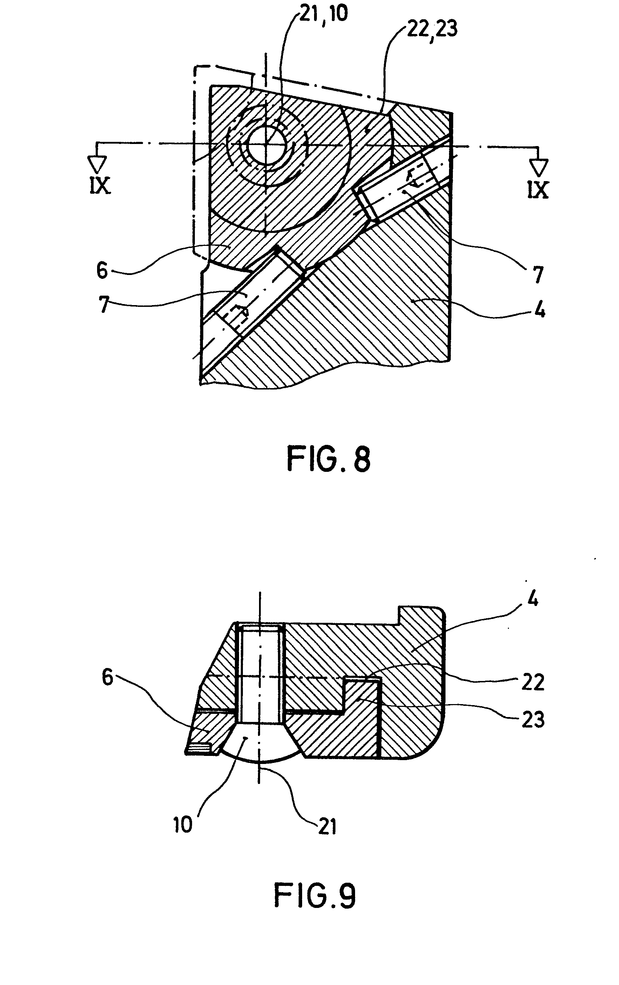

Figur 9   einen Schnitt entlang der Linie IX-IX von Fig. 8,

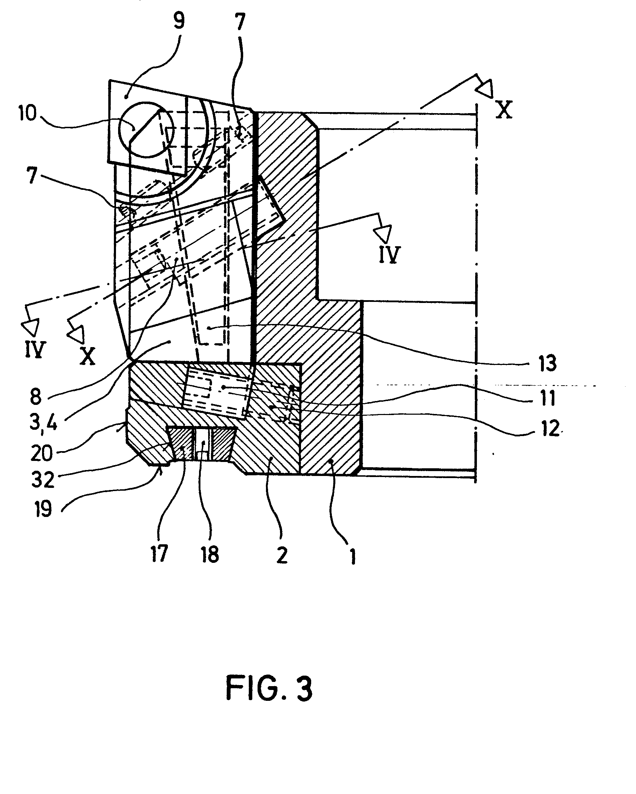

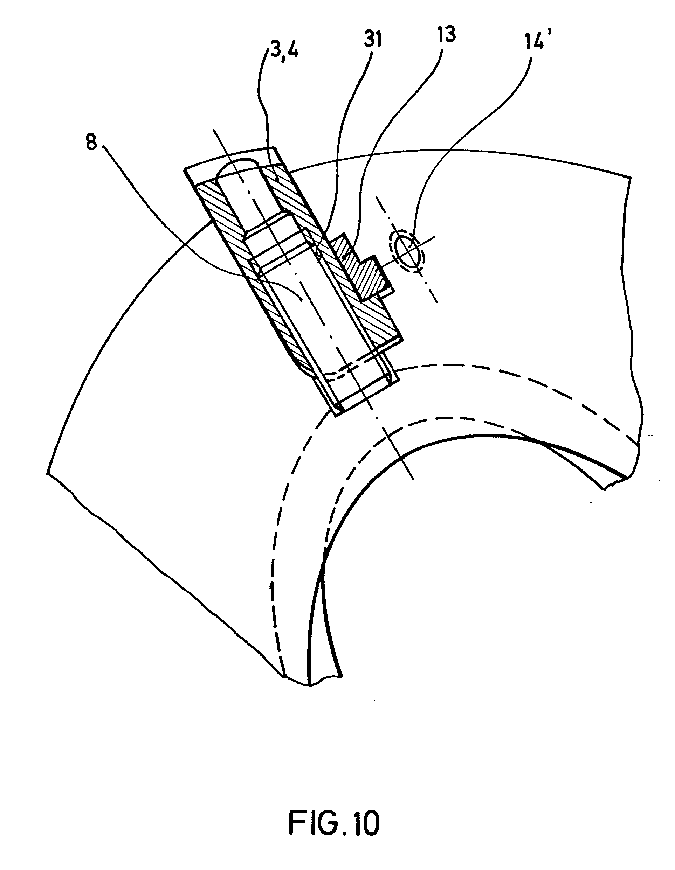

Figur 10 einen Schnitt durch die Nachführschraube gemäß
          der Linie X-X von Fig. 3,

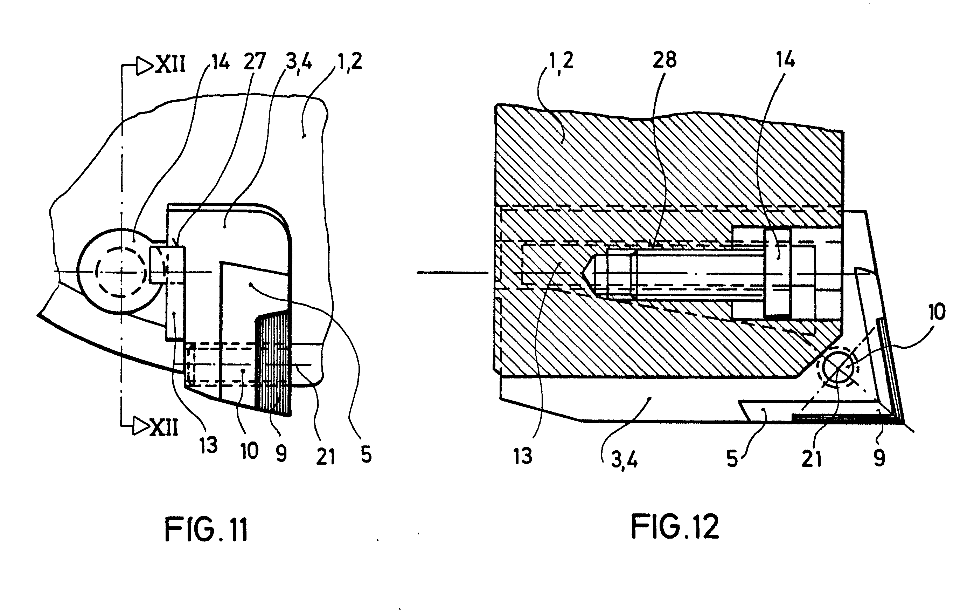

Figur 11 eine Draufsicht auf den Messerkopf ähnlich Figur 1,
          den Radialverstellmechanismus darstellend und

Figur 12 einen Schnitt gemäß der Linie XII-XII von Fig. 11.

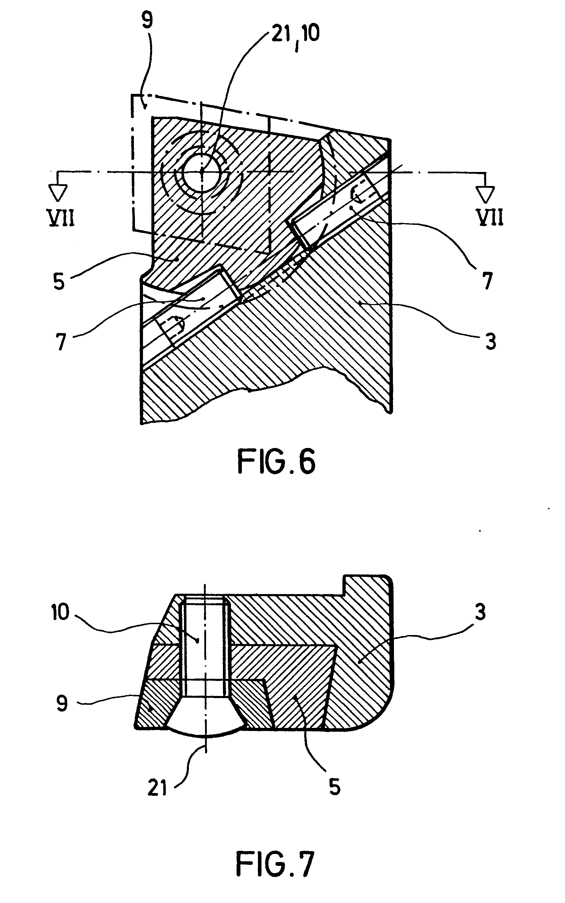

In Fig. 1 ist in schematischer Darstellung in der Draufsicht ein Teil eines ersten Ausführungsbeispiels des erfindungsgemäßen Messerkopfes dargestellt. Dabei weist der Messerkopf einen im wesentlichen zylindrischen Grundkörper 1, 2 auf, welcher an seinem Außenumfang mit mehreren, im wesentlichen radial angeordneten Nuten 24 versehen ist, in welche jeweils ein Trägerteil 3, 4 einführbar ist. An dem Trägerteil ist ein Schneidplattenträger 5 gelagert, welcher wiederum eine Schneidplatte 9 trägt. In der dargestellten Abbildungsweise dreht sich der Messerkopf während des Schneidvorgangs entgegen der Uhrzeigerrichtung. Auf der, in Schneidrichtung gesehen, rückwärtigen Seite des Trägerteils 3, 4 ist ein Radialverstellkeil 13 angeordnet, welcher zwischen dem Grundkörper 1, 2 und dem Trägerteil 3, 4 zur radialen Verstellung des Trägerteils 3, 4 wirkt. Die Verstellung des Radialverstellkeils erfolgt mittels einer Bundschraube 14, welche schematisch in der Draufsicht dargestellt ist. Auf der in Schneidrichtung gesehenen vorderen   Seite des Trägerteils 3, 4 bzw. des Schneidplattenträgers 5 ist ein Spannkeil 15 angeordnet, welcher mittels einer Differentialschraube 16 betätigbar ist. Wie anschließend im Zusammenhang mit Fig. 6 näher erläutert, ist weiterhin eine Einstellschraube 7 dargestellt, welche der Verstellung des Schneidenplattenträger 5 re-

lativ zu dem Trägerteil 3, 4 dient.

In Fig. 2 ist eine Seitenansicht des ersten Ausführungsbeispiels des Messerkopfes von Fig. 1 gezeigt. In der Nut 24 ist das Trägerteil 3, 4 angeordnet, welches wiederum den Schneidplattenträger 5 mit der Schneidplatte 9 trägt. Die Schneidplatte 9 ist mittels einer Befestigungsschraube 10 an dem Schneidplattenträger 5 befestigt, wobei die Befestigungsschraube 10 zugleich auch der Befestigung des Schneidplattenträgers 5 an dem Trägerteil 3, 4 dient. Die Bundschraube 14 ist in einer parallel zur Nut 24 liegenden Bohrung aufgenommen, ihr Schraubenkopf ist in Anlage an dem im einzelnen später noch beschriebenen Radialverstellkeil 13. Weiterhin weist das Trägerteil 3, 4 eine Bohrung 8' zur Aufnahme der im Zusammenhang mit Fig. 10 näher beschriebenen Nachführschraube 8 auf. Von der Umfangsseite des Messerkopfes aus ist fernerhin die Differentialschraube 16 zur Betätigung des Spannkeils 15 mit einem entsprechenden Werkzeug verstellbar.

In Fig. 3 ist der Messerkopf von Fig. 1 im Schnitt gemäß der Linie III-III von Fig. 2 dargestellt. Der Grundkörper besteht bei dem hier gezeigten Ausführungsbeispiel aus einem Träger 1, an welchem ein Ring 2 befestigt ist. Die Befestigung des Ringes 2 kann durch einen Schrumpfsitz erfolgen, es ist jedoch auch möglich, zusätzliche Schrauben vorzusehen. Die Befestigung des Rings 2 an dem Träger 1 ist in Fig. 3 nicht näher dargestellt. Der Ring 2 weist eine Ringnut 32 auf, welche einen schwalbenschwanzförmigen Querschnitt hat. In die Ringnut 32 ist mindestens ein Auswuchtkörper 17 eingesetzt, der ebenfalls einen entsprechenden schwalbenschwanzförmigen Querschnitt aufweist und mittels einer Befestigungsschraube 18 in einer vorbestimmbaren Lage fixierbar ist. Durch Verschieben des Auswuchtkörpers 17 ist es möglich, den Messerkopf nach Beendigung des Einstellvorganges der Schneidkörper auszuwuchten. Der Ring 2 weist weiterhin an seinem Umfang eine Kontrollfläche 20 sowie an seiner dem Schneidkörper entgegengesetzten Seite eine ringförmige Kontrollfläche 19 auf. Die Kontrollflächen 19 und 20 dienen der Kontrolle des Rundlaufs des in einer Werkzeugmaschine eingesetzten Messerkopfes. Unterhalb des Trägerteils 3, 4 ist ein Axialverstellkeil 11 angeordnet, welcher zwischen dem Trägerteil 3, 4 und dem Ring 2 zur Einwirkung kommt. Durch Verdrehen einer Differentialschraube 12 erfolgt eine radiale Verschiebung des Axialverstellkeils, wodurch das Trägerteil 3, 4 in axialer Richtung verschoben wird. Die Differentialschraube 12 ist in einer Bohrung angeordnet, welche im wesentlichen parallel zu der untenliegenden Auflageebene des Axialverstellkeils 11 sowohl in dem Axialverstellkeil als auch in dem Ring 2 verläuft. Die Bohrung ist sowohl in dem Ring 2 als auch in dem Axialverstellkeil mit einem Gewinde versehen. Die beiden Gewinde können, je nach beabsichtigter Wirkung, mit unterschiedlicher Steigung oder unterschiedlichem Drehsinn ausgebildet sein, so daß eine Drehung der Differentialschraube 12 zu der bereits erwähnten Verschiebung des Axialverstellkeils 11 führt. Weiterhin sind in Fig. 3 die Nachführschraube 8, der Radialverstellkeil 13 sowie die Einstellschrauben 7 strichliert dargestellt. Der Radialverstellkeil 13 kann mittels der in Fig. 2 gezeigten Bundschraube 14 in axialer Richtung verschoben werden, wodurch eine Verschiebung des Trägerteils 3, 4 in radialer Richtung hervorgerufen wird. Die genaue Lage und Anordnung der Einstellschrauben 7 ist im einzelnen in Fig. 6 näher erläutert. Die Schneidplatte 9 ist mittels der Befestigungsschraube 10 an dem Trägerteil 3, 4 bzw. dem Schneidplattenträger 5 befestigt. Die Nachführschraube 8 ist in einer Gewindebohrung des Trägerteils 3, 4 aufgenommen, ihre Achse ist im wesentlichen parallel zu der in Fig. 2 gezeigten Nut 24 angeordnet und in einem vorgegebenen Winkel gegen die Drehachse des Grundkörpers 1, 2 geneigt. In Zusammenhang mit Fig. 10 wird die Nachführschraube 8 im einzelnen näher erläutert.

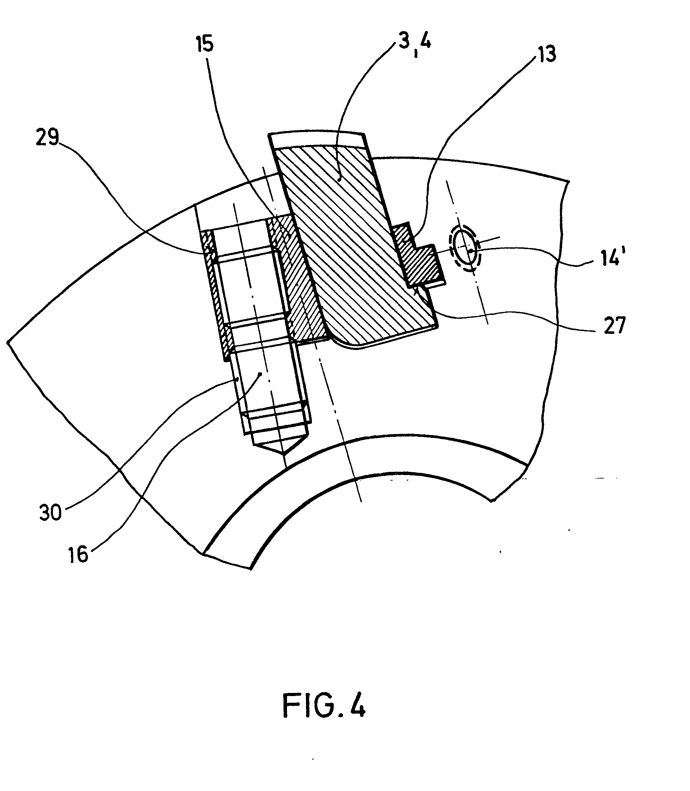

Figur 4 zeigt in der Draufsicht in schematischer Weise einen Schnitt durch den Spannkeil 15 und den Radialverstellkeil 13. Die Lage dieser beiden Keile wurde schematisch bereits in Zusammenhang mit Fig. 1 dargestellt. Der Radialverstellkeil 13 ist, wie in Zusammenhang mit den Fig. 2 und 3 erläutert, in axialer Richtung mittels der Bundschraube 14 verschiebbar. Die Bundschraube 14, die in Fig. 4 nicht näher dargestellt ist, ist in einer Gewindebohrung 14' des Grundkörpers 1, 2 eingeschraubt. Die Achse der Gewindebohrung 14' verläuft, wie in Zusammenhang mit Fig. 3 ersichtlich, parallel zu der dem Außenumfang zugewandten, zur Drehachse des Messerkopfes geneigten Kante des Radialverstellkeils. Das Trägerteil 3, 4 weist eine Anlagefläche 27 auf, welche im Eingriff mit dem Radialverstellkeil 13 steht, welcher im übrigen in einer entsprechenden Nut des Grundkörpers 1, 2 angeordnet ist und sich gegen die Seitenwände der Nut abstützt. Gegenüberliegend dem Radialverstellkeil 13 ist der Spannkeil 15, analog der schematischen Darstellung von Fig. 1, angeordnet. Der Spannkeil 15 ist mittels einer Differentialschraube 16 in einer im wesentlichen radialen Richtung relativ zum Grundkörper 1, 2 bewegbar. Dabei weisen der Spannkeil 15 und der Grundkörper 1, 2 eine Bohrung auf, welche jeweils mit einem Gewinde versehen ist, mit welchem die Differentialschraube 16 in Eingriff steht. Wie in Zusammenhang mit Fig. 3 und der dort dargestellten Differentialschraube 12 beschrieben, führt eine Drehung der Differentialschraube 16 zu einer radialen Verschiebung des Spannkeils 15. Das in dem Spannkeil 15 vorgesehene Gewinde 29 kann sich zu diesem Zweck von dem Gewinde 30 des Grundkörpers 1, 2 entweder durch die Steigung oder durch die Drehrichtung unterscheiden.

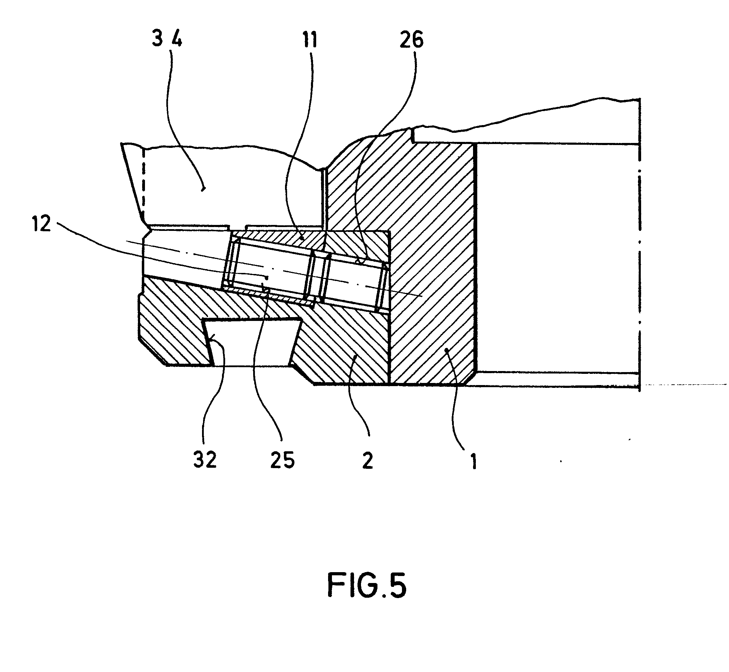

Figur 5 zeigt, gemäß der Schnittlinie V-V von Fig. 2 einen Schnitt durch den Ring 2 und den Träger 1, sowie durch den Axialverstellkeil 11. Figur 5 zeigt im einzelnen nochmals die Differentialschraube 12 sowie die durch den Axialkeil 11 und den Ring 2 verlaufende Bohrung, welche mit zwei unterschiedlichen Gewinden 25, 26 versehen ist. Wie bereits beschrieben, führt eine Drehung der Differentialschraube 12 zu einer Verschiebung des Axialkeils 11.

Figur 6 zeigt einen Schnitt entlang der Linie VI-VI von Fig. 1 durch das Trägerteil 3 und den Schneidplattenträger 5. Der Schneidplattenträger 5 ist mittels der hier nur schematisch dargestellten Befestigungsschraube 10, die wiederum in einer Bohrung mit der Achse 21 angeordnet ist, mit dem Trägerteil 3 verbunden. Weiterhin ist mittels der Befestigungsschraube 10 eine nur gestrichelt angedeutete Schneidplatte 9 an dem Schneidplattenträger 5 befestigt. Der Schneidplattenträger 5 weist an seiner dem Trägerteil 3 zugewandten Seite eine im wesentlichen kreiszylindrische Gestalt auf, welche ihr Zentrum in der Achse 21 der Befestigungsschraube 10 hat. Somit ist der Schneidplattenträger 5 um die Achse 21 relativ zu dem Trägerteil 3 verschwenkbar. Im wesentlichen tangential zu der zylindrischen Aussenfläche des Schneidplattenträgers 5 weist das Trägerteil 3 zwei Bohrungen auf, in welchen jeweils eine Einstellschraube 7 angeordnet ist, die wiederum an dem Schneidplattenträger 5 anliegt. Somit ist der Schneidplattenträger 5 durch Verschraubung der jeweiligen Einstellschraube 7 um die Achse 21 verschwenkbar.

Figur 7 zeigt einen Schnitt durch den Schneidplattenträger 5 und das Trägerteil 3 entlang der Linie VI1-VII der Fig.6. Dabei ist die Befestigungsschraube 10, die Schneidplatte 9 sowie die Drehachse 21 erkennbar. Durch eine entsprechende Ausgestaltung des Querschnitts des Schneidplattenträgers 5 und des Trägerteils 3 ist eine formschlüssige Verbindung realisiert, die eine Bewegung des Schneidplattenträgers 5 in Richtung der Drehachse 21 verhindert.

In Fig. 8 ist ein zweites Ausführungsbeispiel des erfindungsgemäßen Messerkopfes dargestellt, welches einen Schnitt zeigt, welcher, analog zu Fig. 6, entlang der Linie VIII-VIII von Fig. 1 verläuft. Das Trägerteil 4 ist analog dem Trägerteil 3 von Fig. 6 aufgebaut, ebenso die Wirkungsweise der Einstellschrauben 7. Bei dem in Fig. 8 gezeigten Ausführungsbeispiel sind die Drehachsen der beiden Einstellschrauben 7 in einen Winkel zueinander geneigt, wodurch sich eine noch bessere Einstellbarkeit ergibt. Der Schneidkörper 6 weist ebenfalls einen zylindrischen Umfangsbereich auf und ist um die Achse 21 der Befestigungsschraube 10 drehbar. Das in Fig. 8 dargestellte Ausführungsbeispiel zeigt einen Schneidkörper 6, welcher beim Hochgeschwindigkeitsfräsen zur Anwendung kommt. Dabei wurde, im Gegensatz zu dem in Fig. 6 dargestellten Ausführungsbeispiel, auf die Anwendung einer Schneidplatte 9 verzichtet und der Schneidkörper 6 selbst aus entsprechendem Material gefertigt und mit den gewünschten Schneiden versehen.

Figur 9 zeigt einen Schnitt durch das Trägerteil 4 und den Schneidkörper 6 von Fig. 8. Der Schneidkörper 6 weist eine drehsymmetrisch zur Drehachse 21 der Befestigungsschraube 10 ausgebildete Wulst 23 auf, welche mit einer im wesentlichen kreisförmig verlaufenden Nut 22 des Trägerteils 4 in Eingriff bringbar ist. Die Nut 22 und die Wulst 23 verhindern durch formschlüssige Verbindung, daß der Schneidkörper 6 durch den Einfluß der Zentrifugalkraft während des Einsatzes des Messerkopfes aus diesem herausgeschleudert wird.

In Fig. 10 ist, gemäß der Schnittlinie X-X von Fig. 3, die Nachführschraube 8 und ihre Anordnung in dem Trägerteil 3, 4 dargestellt. Analog zu Fig. 4 ist in Fig. 10 weiterhin der Radialverstellkeil 13 sowie die Gewindebohrung 14' für die Bundschraube 14 gezeigt. Die Nachführschraube 8 ist in einer Gewindebohrung in dem Trägerteil 3, 4 gelagert und bewirkt eine Vorspannung des Trägerteils 3, 4 in radialer Richtung. Durch die Vorspannung der Nachführschraube 8 ist sichergestellt, daß das Trägerteil 3, 4 sich ständig in Anlage an dem Radialverstellkeil 13 befindet.

Die Fig. 11 zeigt eine Draufsicht auf den erfindungsgemäßen Messerkopf ähnlich der Fig. 1, wobei, analog Fig. 7, das Zusammenwirken von Schneidplattenträger 5, Trägerteil 3, 4, Schneidplatte 9 sowie Befestigungsschraube 10 in Zusammenhang mit dem Radialverstellkeil 13 dargestellt ist.

In Fig. 12 ist ein Schnitt entlang der Linie XII-XII von Fig. 11 abgebildet, wobei die Lage und Ausbildung des Radialverstellkeils 13 in Zusammenhang mit der Drehachse der Bundschraube 14 dargestellt ist. Die Drehachse der Bundschraube 14 bzw. der sie aufnehmenden Gewindebohrung des Grundkörpers 1, 2 ist dabei parallel zu der rückwärtigen Kante des Radialverstellkeils 13.

Eine Einstellung des jeweiligen Schneidkörpers 5,9,6 relativ zu dem Grundkörper 1,2 des Messerkopfes zur Einstellung des Plan- oder Rundlaufs erfolgt im wesentlichen in den folgenden Schritten. In der Praxis empfiehlt es sich, alle drei Einstellschritte in einem Arbeitsgang durchzuführen, um den gesamten Einstellvorgang mit minimalem Aufwand innerhalb eines kürzest möglichen Zeitraums zu bewerkstelligen. Durch eine Betätigung der Einstellschrauben 7 erfolgt eine Verschwenkung des Schneidkörpers 5,6 relativ zu dem Trägerteil 3,4, wodurch eine Einstellung des Planlaufs bzw. des Rundlaufs des Schneidkörpers 5,6 zu dem jeweiligen Trägerteil 3,4 möglich ist. Es ist zur Fixierung des Schneidkörpers 5,6 in der dann eingestellten Lage selbstverständlich notwendig, die beiden Einstellschrauben 7 derart in Anlage an den Schneidkörper 5,6 zu bringen, daß dieser an einer weiteren Bewegung gehindert wird. Eine Einstellung des Planlaufs der einzelnen Schneidkörper relativ zu dem Grundkörper 1,2 erfolgt durch eine Verstellung der Lage des jeweiligen Trägerteils 3,4 relativ zu dem Grundkörper 1,2. Als Ausgangspunkt für diese Planlaufeinstellung wird die längste Schneide aller an dem Messerkopf vorgesehenen Schneidkörper 5,6,9 zugrunde gelegt, die anderen Schneiden werden dann auf dasselbe Maß eingestellt.

Die Einstellung erfolgt durch das Lösen der Nachführschraube 8 und durch anschließendes Verdrehen der Differentialschraube 12, was eine Verschiebung des Axialverstellkeils 11 zur Folge hat. Die Drehrichtung der Differentialschraube 12 richtet sich nach dem bei dieser Schraube verwirklichten Gewindetyp. Anschließend erfolgt ein Anziehen der Nachführschraube 8 und eine Kontrolle der Planschneide. Dieser Einstellvorgang kann selbstverständlich beliebig oft wiederholt werden, sobald sich die Lage der Schneide relativ zu dem Messerkopf geändert hat. Die Einstellung des Rundlaufs erfolgt analog der oben beschriebenen Arbeitsweise ebenfalls so, daß als Ausgangspunkt der Schneidkörper 5,9,6 zugrunde gelegt wird, welcher die größten radialen Ausmessungen aufweist. Die restlichen Schneidkörper werden dann auf dieses Maß eingestellt. Die Einstellung erfolgt ebenfalls durch Lösen der Nachführschraube 8 und durch Verdrehen der Bundschraube 14, was eine Betätigung des Radialverstellkeils 13 zur Folge hat. Die Drehrichtung der Bundschraube 14 hängt ebenfalls von der vorgesehenen Gewindeform ab. Gleichzeitig zum Verdrehen der Bundschraube 14 wird die Nachführschraube 8 in entsprechender Weise betätigt. Da zur Einstellung des Planlaufs und des Rundlaufs eine Drehung der Nachführschraube 8 notwendig ist, ist es besonders vorteilhaft, beide Einstellvorgänge praktisch gleichzeitig durchzuführen. Der oben beschriebene Einstellvorgang kann unter bestimmten Voraussetzungen auch als Voreinstellphase aufgefaßt werden, nach welcher derselbe Einstellvorgang in einer sogenannten endgültigen Einstellphase mit leicht angezogener Differentialschraube 16 nochmals wiederholt wird. Eine Betätigung der Differentialschraube 16 führt zu einer Verschiebung des Spannkeils 15, durch welchen die erreichte Endlage des Schneidkörpers 5,9,6 relativ zu dem Grund-

0182290

körper 1,2 in oben beschriebener Weise fixiert wird. Nach Beendigung dieser Einstellvorgänge erfolgt durch Verschieben der Auswuchtkörper 17 in der Ringnut 32 eine Auswuchtung des fertig eingestellten Messerkopfs.

GRÜNECKER, KINKELDEY, STOCKMAIR & PARTNER

0182290

PATENTANWÄLTE
EUROPEAN PATENT ATTORNEYS

A GRUNECKER, DIPL -ING
DR. H KINKELDEY, DIPL -ING
DR. W. STOCKMAIR, DIPL -ING. AE E (CALTECH)
DR. K. SCHUMANN, DIPL -PHYS
P. H. JAKOB, DIPL -ING
DR G BEZOLD, DIPL -CHEM
W. MEISTER, DIPL -ING
H. HILGERS, DIPL -ING
DR. H MEYER-PLATH, DIPL -ING
DR. M BOTT-BODENHAUSEN, DIPL -PHYS
DR. U KINKELDEY, DIPL -BIOL

*LICENCIÉ EN DROIT DE L'UNIV DE GENÈVE

8000 MÜNCHEN 22
MAXIMILIANSTRASSE 58

EP 2694-30/Fr

15. Nov. 1985

Walter Kieninger GmbH
Hartmetall- und Diamantwerkzeugfabrik
An den Stegmatten 7
7630 Lahr-Mietersheim


MESSERKOPF
==========


PATENTANSPRÜCHE


1.  Messerkopf mit einem im wesentlichen zylindrischen Grundkörper und mehreren, an dessen Umfangsbereich angeordneten, auswechselbaren, in axialer und/oder radialer Richtung des Grundkörpers mindestens eine Schneide aufweisenden Schneidkörpern, dadurch g e k e n n - z e i c h n e t , daß jeder der Schneidkörper (5,9,6) an einem am Grundkörper (1,2) gehalterten Trägerteil (3,4) gelagert ist, welches mittels separater zwischen Grundkörper (1,2) und Trägerteil (3,4) angeordneter Verstelleinrichtungen (11,12,13,14) radial und axial zum Grundkörper (1,2) verstellbar und mittels einer Spanneinrichtung (15, 16) an diesem fixierbar ist.


2.  Messerkopf nach Anspruch 1, dadurch g e k e n n - z e i c h n e t , daß das Trägerteil (3,4) in einer im wesentlichen radial zur Drehachse des Grundkörpers (1,2) angeordneten, in radialer Richtung im wesentlichen parallele Flächen aufweisenden Nut (24) gehaltert ist.

3. Messerkopf nach Anspruch 2, dadurch g e k e n n - z e i c h n e t , daß jede der Verstelleinrichtungen (11, 12,13,14) im wesentlichen in Form eines Keils (11,13) ausgebildet ist, der im Bereich der Nut (24) mit dem Trägerteil (4) in Zusammenwirkung bringbar ist.

4. Messerkopf nach Anspruch 3, dadurch g e k e n n - z e i c h n e t , daß zur Axialverstellung des Trägerteils (3,4) der Axialverstellkeil (11) auf der der Axialvorschubrichtung des Grundkörpers (1,2) gegenüberliegenden Seite des Trägerteils (3,4) angeordnet ist und eine im wesentlichen radial verlaufende Gewindebohrung (25) aufweist, die mit einer Gewindebohrung (26) im Grundkörper (1,2) fluchtet und daß mit den beiden Gewindebohrungen (25,26) eine Differenzialschraube (12) zur Bewegung des Axialverstellkeils (11) in Eingriff bringbar ist.

5. Messerkopf nach Anspruch 3, dadurch g e k e n n - z e i c h n e t , daß zur Radialverstellung des Trägerteils (3,4) der Radialverstellkeil (13) auf der der Drehrichtung des Grundkörpers (1,2) abgewandten Seite des Trägerteils (3,4) angeordnet ist und mit einer im wesentlichen in radialer Richtung weisenden Anlagefläche (27) des Trägerteils (3,4) in Eingriff bringbar ist und daß im Bereich des Radialverstellkeils (13) der Grundkörper (1,2) eine im wesentlichen axial verlaufende Gewindebohrung (28) aufweist, mit welcher eine Bundschraube (14) in Eingriff bringbar ist, deren Schraubenkopfunterseite in Anlage an den Radialverstellkeil (13) bringbar ist.

6. Messerkopf nach einem der Ansprüche 1 bis 5, dadurch g e k e n n z e i c h n e t , daß auf der dem Radialverstellkeil (13) gegenüberliegenden Seite des Trägerteils (3,4) ein Spannkeil (15) angeordnet ist, der von einer Gewindebohrung (29) durchsetzt ist, die mit einer Gewindebohrung (30) des Grundkörpers (1) fluchtet, wobei in den Gewindebohrungen (29,30) eine Differenzialschraube (16) zur Bewegung des Spannkeils (15) angeordnet ist.

7. Messerkopf nach einem der Ansprüche 1 bis 6, dadurch g e k e n n z e i c h n e t, daß der Schneidkörper (5,9,6) an dem Trägerteil (3,4) mittels einer Befestigungsschraube (10) befestigbar ist und um die Achse (21) der Befestigungsschraube (10) zumindest in einem bestimmten Bereich verschwenkbar ist und daß die Schwenkbewegung mittels zweier im Trägerteil (3,4) gelagerter Einstellschrauben (7) begrenzbar ist.

8. Messerkopf nach einem der Ansprüche 1 bis 7, dadurch g e k e n n z e i c h n e t, daß das Trägerteil (3,4) mit einer mit einem Gewinde versehen, im wesentlichen in einer zum Grundkörper (1,2) radialen Ebene verlaufenden Ausnehmung (31) versehen ist, in welcher eine Nachführschraube (8) zur radialen Bewegung des Trägerteils (3,4) führbar und in Anlage an dem Grundkörper (1) bringbar ist.

9. Messerkopf nach einem der Ansprüche 1 bis 8, dadurch g e k e n n z e i c h n e t, daß der Schneidkörper (5,9) in Form eines eine Schneidplatte (9) tragenden Schneidplattenträgers (5) ausgebildet ist.

10. Messerkopf nach Anspruch 9, dadurch g e k e n n z e i c h n e t, daß die Schneidplatte (9) mittels der Befestigungsschraube (10) an dem Schneidplattenträger (5) befestigbar ist.

11. Messerkopf nach einem der Ansprüche 1 bis 8, dadurch g e k e n n z e i c h n e t, daß der Schneid-

körper (6) eine mit einer radial nach außen weisenden Anlagefläche versehene Wulst (23) aufweist, die mit einer eine radial nach innen weisende Auflagefläche aufweisenden Nut (22) des Trägerteils (4) in Eingriff bringbar ist.

12. Messerkopf nach einem der Ansprüche 1 bis 11, dadurch g e k e n n z e i c h n e t , daß der Grundkörper (1,2) in seinem Umfangsbereich eine Ringnut (32) aufweist, in welcher mindestens ein Auswuchtkörper (17) befestigbar ist.

13. Messerkopf nach Anspruch 12, dadurch g e k e n n - z e i c h n e t , daß die Ringnut (32) einen schwalbenschwanzförmigen Querschnitt aufweist und daß der Auswuchtkörper (17) ein in dieses einführbares Schwalbenschwanzprofil aufweist und mittels einer Befestigungsschraube (18) befestigbar ist.

14. Messerkopf nach einem der Ansprüche 1 bis 13, dadurch g e k e n n z e i c h n e t , daß der Grund- körper (1,2) an seinem radialen Umfang eine diesen ringförmig umgebende Kontrollfläche (20) aufweist.

15. Messerkopf nach einem der Ansprüche 1 bis 14, dadurch g e k e n n z e i c h n e t , daß der Grund- körper (1,2) an einer axialen Stirnfläche eine ringförmig umlaufende Kontrollfläche (19) aufweist.

16. Messerkopf nach einem der Ansprüche 1 bis 15, dadurch g e k e n n z e i c h n e t , daß der Grund- körper (1,2) in Form eines die Schneidkörper (5,9,6) tragenden Trägers (1) und eines ringförmigen, an dem Träger (1) befestigten, die Ringnut (32) sowie die Kontrollflächen (19,20) aufweisenden Rings (2) ausgebildet ist.

1/8    0182290

FIG.1

FIG.2

FIG. 3

FIG.4

0182290

FIG.5

FIG.6

FIG.7

6/8

0182290

FIG. 8

FIG.9

FIG.10

FIG.11

FIG.12

0182290